(19) 

**Europäisches Patentamt**
**European Patent Office**
**Office européen des brevets**

(11) **EP 4 489 045 A1**

(12) **EUROPEAN PATENT APPLICATION**

(43) Date of publication:
**08.01.2025   Bulletin 2025/02**

(21) Application number: **23382684.1**

(22) Date of filing: **04.07.2023**

(51) International Patent Classification (IPC):
***H01H 9/00*** (2006.01)

(52) Cooperative Patent Classification (CPC):
**H01F 29/04; H01H 9/0005; H02H 7/055**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
• **ROY MARTIN, Carlos Manuel**
  **50006 ZARAGOZA (ES)**
• **MURILLO JASO, Rafael**
  **50004 ZARAGOZA (ES)**

(74) Representative: **Vossius & Partner**
**Patentanwälte Rechtsanwälte mbB**
**Siebertstraße 3**
**81675 München (DE)**

(54) **TAP-CHANGER PROTECTED WITH SURGE ARRESTERS**

(57)   The invention provides a tap-changer (112, 212) for a transformer, the tap-changer comprising: a plurality of tap contacts (130, 230) configured to be connected to different taps of the transformer, wherein the plurality of tap contacts comprises a first tap contact, a second tap contact, and a third tap contact; and a surge arrester (120, 220) on one side connected to the first tap contact and on another side connected to the third tap contact. The second tap contact is not directly connected to any surge arrester.

Fig. 1

EP 4 489 045 A1

**Description**

The present disclosure relates to a tap-changer (TC) for a transformer.

Tap-changers are used to select a variable number of turns in a winding of the transformer. When a TC with a highest voltage for equipment lower than a highest voltage for equipment of a corresponding transformer is used, the TC can break, especially at voltage surges like a lightning impulse. Hence, the system (of TC and transformer) is limited to the highest voltage for equipment of the TC. Generally, the TC represents a bigger part of the costs compared to the transformer. Therefore, it can be advantageous to use a cheaperTC (with a highest voltage for equipment) to save costs.

The present disclosure relates to a tap-changer for a transformer, wherein the tap-changer comprises: a plurality of tap contacts configured to be connected to different taps of the transformer, wherein the plurality of tap contacts comprises a first tap contact, a second tap contact, and a third tap contact; and a (first) surge arrester on one side connected to the first tap contact and on another side connected to the third tap contact. The second tap contact is not directly connected to any surge arrester.

Along other advantages, this setup reduces a voltage across the whole TC and between a tap in service and a pre-selected tap. Especially under a lightning impulse (LI), a voltage in the TC is limited. Further, as not all tap contacts are directly connected to a surge arrester, the number of surge arresters can be limited and costs can be saved.

The surge arrester can comprise spark gaps, discharge tubes, zener-type semiconductors, and/or metal-oxide varistors.

Various embodiments may preferably implement the following features.

Preferably, the second tap contact can be in-between the first tap contact and the third tap contact (that the second tap (contact) represents a turn number between the first and third tap (contact)).

Such an arrangement protects the TC and all tap contacts, even when not all tap contacts are directly connected to a surge arrester.

Preferably, the first tap contact is at a maximum position of the tap-changer and the third tap contact is at a minimum position of the tap-changer.

The maximum position of the tap-changer represents a position in which a system voltage is (directly) applied to a maximum (generally all) of turns of the corresponding transformer. The system voltage is the voltage applied to the system (of TC and transformer). The minimum position of the TC is a position in which the system voltage is applied to the least number of turns possible for the TC.

Preferably, the plurality of tap contacts further comprises a fourth tap contact, and the tap-changer further comprises a second surge arrester on one side connected to the third tap contact and on the other side connected to the fourth tap contact.

Also, more than two surge arresters (third surge arrester, ...) are possible. Each of the more than two surge arresters (except the first surge arrester) can be connected with a first side to a same tap contact as a second side of the previous surge arrester. Further tap contacts can be present, which are not directly connected to a surge arrester and (some of) which may be arranged between the terminals of the second (or third, ...) surge arrester.

Preferably, the first tap contact is at a maximum position of the tap-changer and the fourth tap contact is at a minimum position of the tap-changer.

Preferably, the tap-changer is an on-load tap-changer (OLTC).

The TC may be a no-load tap-changer, a mechanical TC, or a solid-state TC.

Preferably, the OLTC is a dry OLTC.

A corresponding transformer can be a dry type transformer.

The present disclosure also relates to a transformer system comprising a transformer and the tap-changer as previously mentioned.

Preferably, a maximum continuous operational voltage of each of the first surge arrester and the second surge arrester is higher or equal to a maximum voltage applied to the first surge arrester or the second surge arrester, correspondingly; and a residual voltage of the first surge arrester and the second surge arrester together is smaller than a rated lightning impulse withstand voltage across the tap changer.

Such a selection of surge arresters protects the TC and all tap contacts, even when not all tap contacts are directly connected to a surge arrester.

For the maximum continuous operation voltage (of each) of the surge arresters, any position (tap contact being selected) of the TC can be considered.

A maximum continuous operational voltage of a surge arrester may be defined as a maximum voltage which can be applied to the surge arrester for a longer time (for example 30 minutes or longer) without the surge arrester breaking.

A residual voltage (also known as discharge voltage) of a surge arrester may be defined as a peak value of voltage that appears between terminals of the surge arrester during the passage of discharge current through it.

Preferably, the surge arrester and the second surge arrester (as well as each further surge arrester connected in a similar way in the transformer system) each fulfill the following two formulae:

$$U\_C \geq U\_ph \cdot S \cdot (N\_MOV/N\_min) \hspace{4cm} \text{(equation 1)}$$

wherein U_C is the maximum continuous operational voltage of a corresponding surge arrester; U_ph is a phase voltage of the transformer; S is a system overvoltage safety factor, where S ≥ 1; N_MOV is a number of turns of the transformer between terminals of the corresponding surge arrester; N_min is a number of turns of the transformer which are connected when the tap-changer is in the minimum position (number of turns of the transformer which are only on one side connected to the tap-changer; number of active turns of the transformer when the tap-changer is in the minimum position); and

$$U\_res < LI\_TC / MOV\_no \hspace{4cm} \text{(equation 2)}$$

wherein U_res is a residual voltage of the corresponding surge arrester; LI_TC is a rated lightning impulse withstand voltage across the tap changer; and MOV_no is a total number of surge arresters.

The underscore ("_") represents subscript, in that the letters immediately following the underscore shall be in subscript. The point (".") represents multiplication. U_ph can alternatively be a nominal phase voltage. U_ph may be the same as the system voltage mentioned above. The system overvoltage safety factor (S) may be 1, 1.1, 1.5, 2, or another value bigger than 1. The system overvoltage safety factor protects the surge arrester from taking damage. N_min can also be a number of turns connected in the winding with the TC in the minimum position. This means the turns between the connection points of the output voltage and the TC. MOV_no can mean the number of surge arresters per phase.

Preferably, a highest voltage for equipment of the transformer is bigger than a highest voltage for equipment of the tap-changer.

In this, a cheaper TC can be used and/or a transformer with a bigger highest voltage for equipment can be used (which can result in a higher overall highest voltage for equipment). Preferably, the highest voltage for equipment of the tap-changer is 72.5 kV and the highest voltage for equipment of the transformer is 145 kV.

Alternatively, the highest voltage for equipment for the TC can be 40.5 kV or 36 kV, and the highest voltage for equipment for the transformer can be 72.5 kV. Also, other values are possible.

Preferably, the plurality of surge arresters is located in an encasement of the tap-changer. This can save space. The encasement of the TC can be a box in which essential parts of the TC are enclosed. Such essential parts may be a tap selector comprising the tap contacts (which may still be connected with a wire from the outside) and switches (especially in the case of an OLTC), and a diverter switch (in the case of an OLTC). Of course, connections between corresponding parts, and the surge arresters are comprised too. The surge arresters may be located close to the tap contacts (for example closer to the tap terminals than to a diverter switch and/or a motor drive shaft).

Preferably, an insulation of the tap-changer to ground is equal or bigger than an insulation of the transformer to ground.

Preferably, a number of turns between the first tap contact and the third tap contact is essentially equal to a number of turns between the third tap contact and the fourth tap contact.

The term "essentially" can mean a deviation of ± 10%, 5%, 1%, or exact equality (0%). In the case of more than two surge arresters, the number of turns between terminals of each of the more than two surge arresters can be essentially equal. Alternatively, some or all of the two or more than two surge arresters may have different number of turns between the terminals.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.

Fig. 1 is a circuit diagram of an embodiment of the transformer system.

Fig. 2 is a circuit diagram of another embodiment of the transformer system.

Fig. 3 is a schematic illustration of a part of a transformer system.

Fig. 4 shows voltages of a transformer alone.

Fig. 5 shows another test setup of the system without surge arresters.

Figs. 6a and 6b show measured voltage and current in transformer systems with surge arresters.

Fig. 7 shows voltage measurements of two lightning impulses.

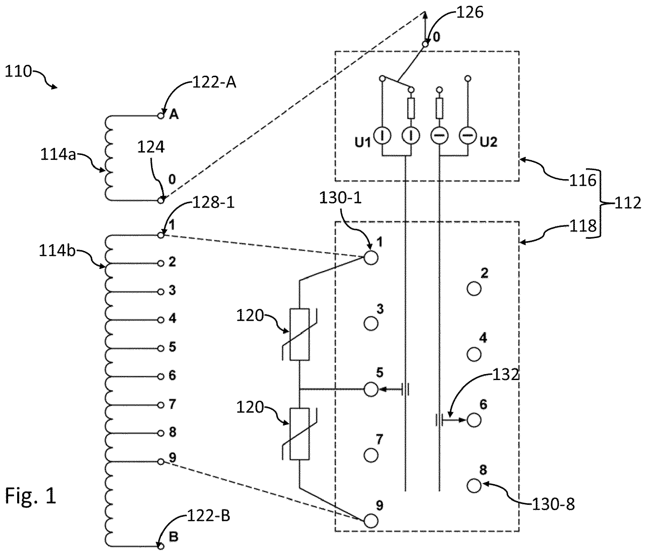

Fig. 1 shows a circuit diagram of an embodiment of the transformer system 110. The transformer system 110 comprises a tap-changer 112 and a transformer. The tap-changer comprises a diverter switch system 116 and a tap selector 118. Only a winding 114 of the transformer is shown in this figure. The winding 114 is made of two parts 114a and 114b. The winding can be a primary side winding or a secondary side winding. The winding 114 can be the winding of one phase from a plurality of phases (for example three phases) of the entire transformer. The transformer system 110 further comprises two surge arresters 120.

The points "A" and "B" are terminals 122 (122-A and 122-B) at which the system voltage can be applied to. The terminal "0" (124) is connected to the connection "0" (126) of the diverter switch system 116. At the connection 0 (126), a switch may be comprised by (or connected to) the diverter switch system 116. The taps "1" to "9" 128 (128-1 to 128-9) are connected to the tap contacts "1" to "9" 130 (130-1 to 130-9) (128-1 to 130-1, 128-2 to 130-2, and so on).

The first part 114a of the winding 114 can be omitted. Then the system voltage would be applied to connection "0" 126 and terminal B (122-B). The winding 114 (especially the second part 114b) has taps 128 connected at different positions of the winding 114. Between each two neighboring taps 128, there can be substantially the same number of turns. Alternatively, some or all neighboring taps 128 can have a different number of turns between them. The number of turns between point "A" and point "0" and the number of turns between point "9" and point "B" can be equal or different to each other and/or to the number of turns between two other neighboring taps 128.

The diverter switch system 116 comprises a switch (can be a heavy duty switch) with two connections (U1 side and U2 side). Each side of connection comprises a resistor and two breakers (for example vacuum breakers). The operation of the tap-changer 112 is done in two main steps: first, the next tap is preselected; second, the (diverter) switch changes the connection from the tap in operation to the preselected tap. At the same time, this second step is divided in four steps: first, the (diverter) switch transfers the current to the current tap (switch being connected to both connections of one side); second, the (diverter) switch transfers the current to the current tap trough a first resistor (switch being connected to only one connection of one side); third, the (diverter) switch transfers the current to the preselected tap trough a second resistor (switch being connected to only one connection of the other side); fourth, the (diverter) switch transfers the current to the preselected tap (switch being connected to both connections of the other side). The diverter switch system 116 switches between the left side of tap contacts 130 (with uneven numbers) and the right side of tap contacts 130 (with even numbers). A tap-changer 112 can also be implemented without a diverter switch system, as for example as a no-load tap-changer.

The tap selector 118 comprises nine tap contacts 130, two wires corresponding to the two side of contacts of the diverter switch system, and two contact selectors 132. In the shown figure, the tap contacts 130 are divided up between the two lines in that each next taps 128 of the winding 114 (especially of the second part 114b) are connected in an alternating fashion to the two lines. Alternatively, different arrangements of tap contacts and taps are possible. Each contact selector 132 can select one tap contact 130 from its own side to be connected to the corresponding line. The diverter switch system 116 selects on which of the two lines the voltage is applied to and hence which of the two contact selectors 132 selects the tap, which is used. In the figure, tap contact 5 is selected, while there is no voltage on the right line and hence tap contact 6 is not the selected one (rather a pre-selected tap contact).

A minimum position would correspond to selecting tap 9, and a maximum position would correspond to selecting tap 1. In the minimum position, the system voltage is only directly applied to the turns between point A and 0 (122-A and 124; turns of part 114a), and 9 and B (128-9 and 122-B). The number of these turns (in sum) would correspond to N_min (see equations 1 and 2). N_MOV would correspond to the number of turns between taps 1 and 5 for the upper surge arrester 120, and to the number of turns between taps 5 and 9 for the lower surge arrester 120.

The two surge arresters 120 are connected to tap contacts 1 and 5, and 5 and 9, respectively. Hence tap contacts 1, 5, and 9 are (directly) connected to a surge arrester 120, while the other tap contacts 130 (2, 3, 4, 6, 7, and 8) are not (directly) connected to any surge arrester 120. MOV_no would here be 2 because there are two surge arresters 120.

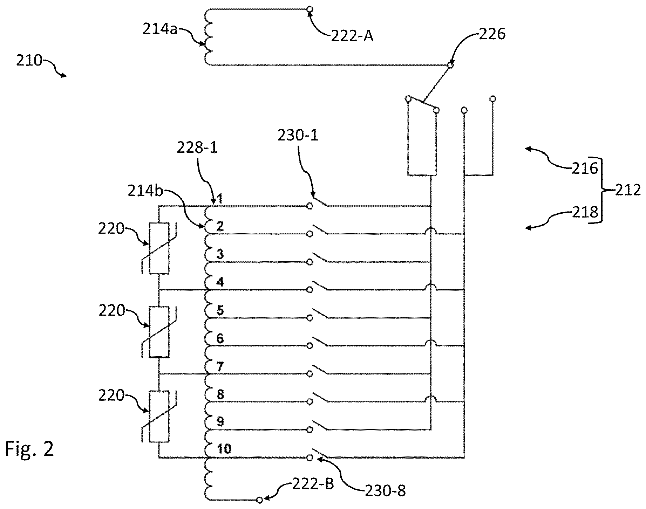

Fig. 2 is a circuit diagram of another embodiment of the transformer system 210. In many aspects, the transformer system 210 of fig. 2 is similar to the transformer system 110 of fig. 1. Similarities shall not all be repeated herein. Reference signs of figs. 1 and 2 are generally similar, except for the first digit according to the figure number.

Transformer system 210 comprises a tap-changer 212 and a transformer. The tap-changer comprises a diverter switch system 216 and a tap selector 218. Only a winding 214 of the transformer is shown here. Two parts 214a and 214b of the winding 214 are shown here. Further, the transformer system 210 comprises three surge arresters.

The diverter switch system 216 does not show a resistor and breakers, as in fig. 1. This is an example of an individually exchangeable difference.

The tap selector 218 comprises a plurality of tap contacts 230 (ten tap contacts 230-1 to 230-10). In this other embodiment, the tap contacts 230 are individual electronical switches. These (number of tap contacts and them being electronical switches) are examples of exchangeable differences between figs. 1 and 2. While all tap contacts 230 are open in the figure, one tap contact 230 can be closed to form the selected tap contact (here, especially one of the uneven numbers of tap contacts 230 because the switch of the diverter switch system 216 is on the left side).

A minimum position would correspond to selecting tap 10. N_MOV would correspond to the number of turns between taps 1 and 4, or 4 and 7, or 7 and 10, for the corresponding surge arresters 220. MOV_no would be 3.

Also different systems with a different number of surge arresters and/or tap and/or turns are possible.

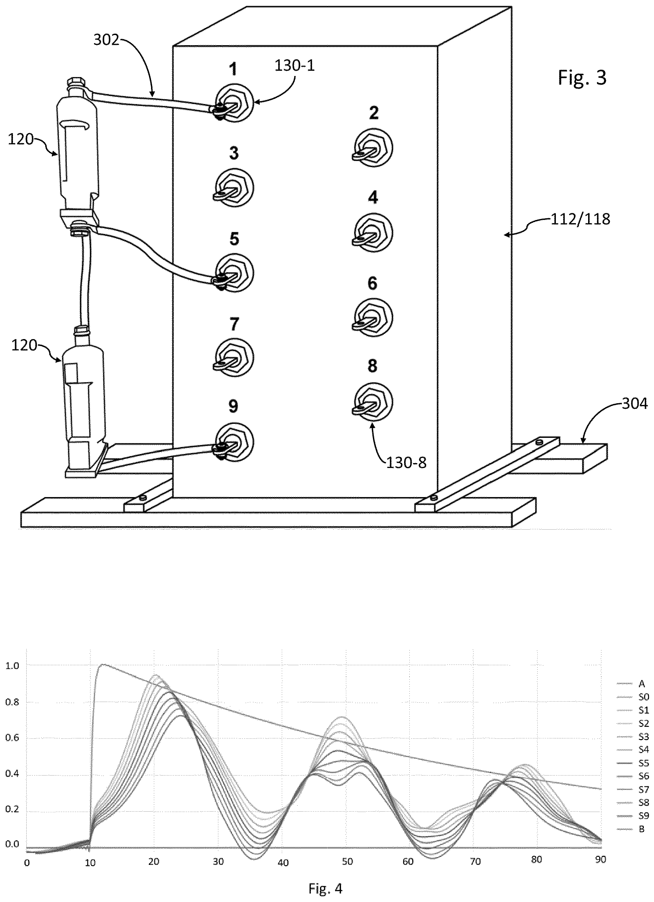

Fig. 3 shows a schematic illustration of a part of a transformer system. A tap-changer 112 or tap selector 118 (more specifically the encasement thereof) are shown. Tap contacts 130 (130-1 to 130-9) are located on the encasement of the tap-changer 112 or tap selector 118 (short: encasement). Two surge arresters 120 are connected to three tap contacts 130 (130-1, 130-5, and 130-9) with cables 302. The setup of this figure can correspond to the embodiment of fig. 1. It can also be adapted to the other embodiment of fig. 2, or many other embodiments.

In this figure, the surge arresters 120 are located outside of the encasement. This makes producing of the system easier. Also, less additional insulation between the surge arresters 120 and the tap-changer 112 is possible in this way.

Alternatively, the surge arresters 120 can also be arranged inside the encasement. This can save space. Sufficient insulation would be arranged to insulate the surge arresters 120 and the other parts of the tap-changer 112.

The encasement is arranged on a footing 304. Beside structural stability, the footing can act as insulation of the tap-changer 112. The footing 304 can be built in such a way that there is sufficient insulation to ground. This can be more insulation as in regular tap-changers because the voltage on the tap-changer 112 in the system according to the disclosure is higher. The footing 304 can also be built differently or omitted.

Figures 4 to 7 show some specific examples and tests. The parts used are the following:
The transformer with a rated power of 5000 kVA; a nominal voltage of 66000 $\pm$ 4 $\cdot$ 3.75 % / 660 V; a connection (symbol) YNyn0; a HV (high voltage) highest voltage for equipment of 72.5 kV; and a HV insulation AC/LI of 140 / 325 kV. The tap-changer is an OLTC as follows: Model: 9 positions with linear regulation; Highest voltage for equipment (Um): 40.5 kV; Insulation to ground AC/LI 85 / 200 kV; Insulation across tap winding AC/LI 20 / 80 kV; Insulation tap in service and pre-selected AC/LI: 5 / 20 kV; and Step voltage: 900 V. The surge arresters are as follows: Type: MWD 8, from Hitachi Energy; Continuous operating voltage (Uc): 8 kV; and residual voltage (U_res) at 10 kA: 24.6 kV.

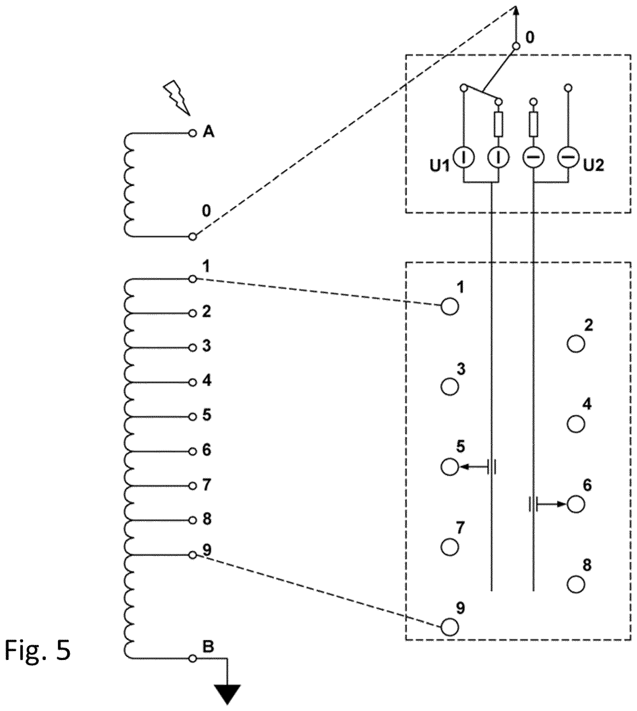

Figure 4 shows voltages of a transformer alone (without surge arresters; as shown in fig. 5). An LI from a reduced voltage recurrent surge generator is applied to the transformer. This graph shows the real voltage the TC must withstand. The y-axis shows voltage in per unit (p.u.), and the x-axis shows time in microseconds ($\mu$s). The line which is mostly on top and does not oscillate is the voltage at point "A" (like 122-A and 222-A) where the voltage is applied to. The voltage at point "B" (like 122-B and 222-B) is so close to zero that it cannot be distinguished in this figure. The bundle of oscillating lines in-between are the voltages at the different taps.

Mostly, the line on top corresponds to the first tap (like 128-1 and 228-1) and the line at the bottom of the bundle corresponds to the last (ninth) tap (like 128-9 and 228-9). The lines in-between are ordered corresponding to from first to last tap. A small exception from this can be seen in the range from 70 to 75 $\mu$s.

A summary of the different cases is represented in table 1 below. The first row of the table shows which values are presented below. The second row (of three rows) represents values between taps. The third row (of three rows) represents values across the whole TC. The first (left) column states which values are regarded. The second column ("TC (tap) position)" states the selected tap position, wherein tap position 1 presents an increase by + 15 % and tap position 9 a decrease by -15 %. Position 5 corresponds to 0 %. The third column ("Worst case location (tap))" shows between which taps the voltage was maximum. The fourth column ("Worst case measured [p.u.]") the measured voltage in per-unit. The fifth column ("Worst case LI 170 [kV]") shows the worst case voltage at a LI 170. The sixth column ("Worst case LI 325 [kV]") shows the worst case voltage at a LI 325. The seventh column ("TC rated [kV]") shows what LI rated insulation strength the TC has. The lower of these values (80 kV) corresponds to LI_TC.

table 1

| Lightning impulse (LI) insulation strength | TC (tap) position | Worst case location (tap) | Worst case measured [p.u.] | Worst case LI 170 [kV] | Worst case LI 325 [kV] | TC rated [kV] |
|---|---|---|---|---|---|---|
| Between selected tap and pre-selected tap | 1 | 7-8 | 0.064 | 10.9 | 20.8 | 20 |
| | 9 | 5-6 | 0.061 | 10.4 | 19.8 | |
| | 5 | 7-8 | 0.057 | 9.7 | 18.5 | |

(continued)

| Lightning impulse (LI) insulation strength | TC (tap) position | Worst case location (tap) | Worst case measured [p.u.] | Worst case LI 170 [kV] | Worst case LI 325 [kV] | TC rated [kV] |
|---|---|---|---|---|---|---|
| Across whole tap changer | 1 | 1-9 | 0.442 | 75.1 | 143.7 | 80 |
| | 9 | 1-9 | 0.321 | 54.6 | 104.3 | |
| | 5 | 1-9 | 0.324 | 55.1 | 105.3 | |

When the 325 kV LI, corresponding to 72.5 insulation level, is applied to the transformer line terminal, the voltage across the whole tap changer is higher than the OLTC rated value (143.7 versus 80 kV maximum). So, the 40.5 kV (highest voltage for equipment) OLTC cannot support the stress corresponding to 72.5 kV without the inclusion of surge arresters.

Figure 5 shows another test setup of the system without surge arresters. Other than the lack of surge arresters, it is similar to fig. 1. In this other test, different LI were applied to point A (where a bold symbol is in fig. 5), and voltage values were measured at positions 1 (+ 15 %), 5 (0 %), and 9 (-15 %). A summary of this other test is summarized in table 2:

table 2

| TC position | LI applied OK [kV] | Comments |
|---|---|---|
| 1 | 170 | 36 kV level reached |
| 9 | 215 | |
| 5 | 325 | 72.5 kV level reached |

The first column shows the TC position measured. The second column shows the LI applied at which the TC without failure. The third column shows which voltage levels could be reached.

This shows that, when the transformer system does not comprise the surge arresters, only 36 kV level can be used without breaking the TC (at some position). Hence, the TC cannot be connected to a 72.5 kV transformer (without breaking the TC).

The next test was done with a transformer system as set up in figure 1 (including surge arresters). The voltage was applied and measured similar as in the previous (other) test (explained with figure 5). Similar as before, the results are summarized in the following table 3:

table 3

| TC position | LI applied OK [kV] | Comments |
|---|---|---|
| 1 | 325 | 72.5 kV level reached |
| 9 | 325 | 72.5 kV level reached |
| 5 | 325 | 72.5 kV level reached |

It can be seen that in all positions the 72.5 kV can be reached. This shows that the use of surge arresters as explained makes it possible to use a 40.5 kV TC with a 72.5 kV transformer.

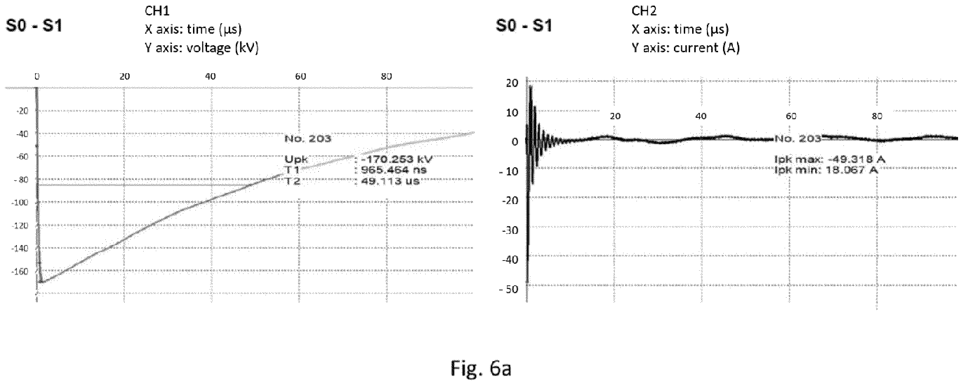

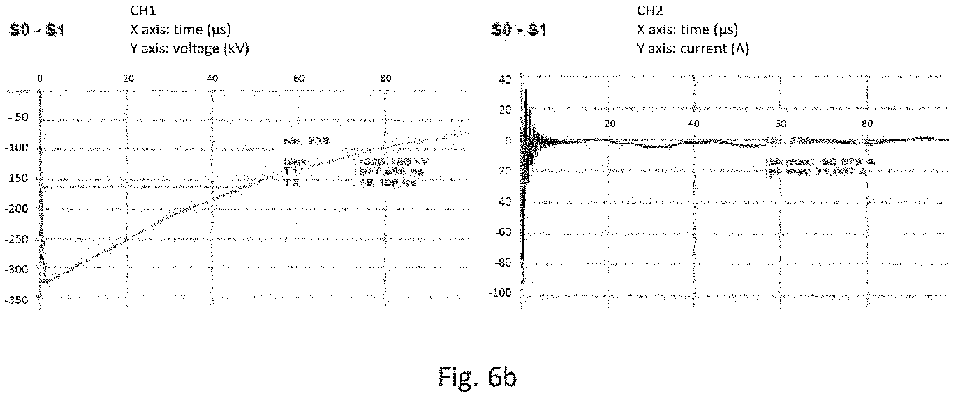

Figures 6a and 6b show measured voltage (left graph) and current (right graph) in transformer systems with surge arresters as described. Figure 6a shows a LI with 170 kV and figure 6b shows a LI with 325 kV. In the case of fig. 6a (170 kV), the surge arresters are not acting. In the case of fig. 6b (325 kV), the surge arresters are acting. It can be seen that the voltage and current waves are not noticeably distorted by the acting (and hence presence) of the surge arresters.

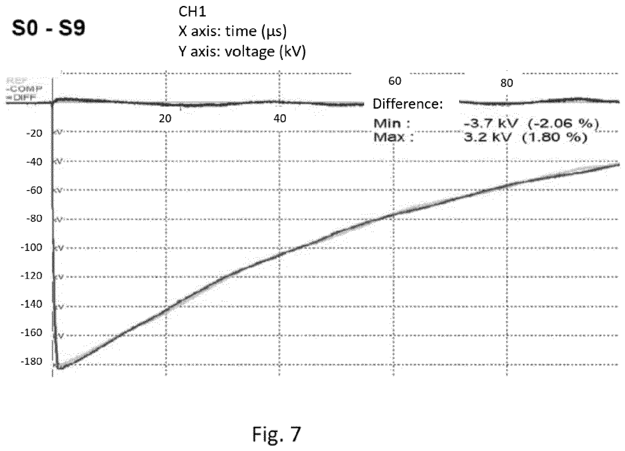

Figure 7 shows voltage measurements of two lightning impulses (both times 180 kV). The difference between the graphs is that one represents a system with surge arresters and the other graph represents a system without surge arresters. The difference between the two graphs is about 2 % or smaller. The line close to y = 0 is the difference between the two former graphs.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A Tap-changer (112, 212) for a transformer, the tap-changer comprising:

    a plurality of tap contacts (130, 230) configured to be connected to different taps of the transformer, wherein the plurality of tap contacts (130, 230) comprises a first tap contact, a second tap contact, and a third tap contact; and
    a surge arrester (120, 220) on one side connected to the first tap contact and on another side connected to the third tap contact;
    wherein the second tap contact is not directly connected to any surge arrester (120, 220).

2. The tap-changer according to claim 1, wherein the plurality of tap contacts (130, 230) further comprises a fourth tap contact, and wherein the tap-changer further comprises a second surge arrester on one side connected to the third tap contact and on the other side connected to the fourth tap contact.

3. The tap-changer according to claim 1, wherein the first tap contact is at a maximum position of the tap-changer and the third tap contact is at a minimum position of the tap-changer.

4. The tap-changer according to claim 2, wherein the first tap contact is at a maximum position of the tap-changer and the fourth tap contact is at a minimum position of the tap-changer.

5. The tap-changer according to any one of claims 1 to 4, wherein the tap-changer is an on-load tap-changer, OLTC.

6. The tap-changer according to claim 5, wherein the OLTC is a dry OLTC.

7. A transformer system (110, 210) comprising a transformer and the tap-changer of any of claims 1 to 6.

8. The transformer system (110, 210) according to claim 7, wherein a maximum continuous operational voltage of each of the first surge arrester and the second surge arrester is higher or equal to a maximum voltage applied to the first surge arrester or the second surge arrester, correspondingly; and
   a residual voltage of the first surge arrester and the second surge arrester together is smaller than a rated lightning impulse withstand voltage across the tap changer.

9. The transformer system (110, 210) according to claim 8, wherein the surge arrester (120, 220) and the second surge arrester each fulfill the following two formulae:

$$U_C \geq U_{ph} \cdot S \cdot \frac{N_{MOV}}{N_{min}}$$

wherein Uc is the maximum continuous operational voltage of a corresponding surge arrester (120, 220);
$U_{ph}$ is a phase voltage of the transformer;
S is a system overvoltage safety factor, where $S \geq 1$;
$N_{MOV}$ is a number of turns of the transformer between terminals of the corresponding surge arrester (220);
$N_{min}$ is a number of turns of the transformer which are connected when the tap-changer is in a minimum position; and

$$U_{res} < \frac{LI_{TC}}{MOV_{no}}$$

where $U_{res}$ is a residual voltage of the corresponding surge arrester (120, 220);
$LI_{TC}$ is a rated lightning impulse withstand voltage across the tap changer; and
$MOV_{no}$ is a total number of surge arresters (120, 220).

10. The transformer system (110, 210) according to claim 7 to 9, wherein a highest voltage for equipment of the transformer is bigger than a highest voltage for equipment of the tap-changer.

11. The transformer system (110, 210) according to claim 10, wherein the highest voltage for equipment of the tap-changer is 72.5 kV and the highest voltage for equipment of the transformer is 145 kV.

12. The transformer system (110, 210) according to any of claims 7 to 11, wherein the plurality of surge arresters (120, 220) is located in an encasement of the tap-changer.

13. The transformer system (110, 210) according to any of claims 7 to 12, wherein an insulation of the tap-changer to ground is equal or bigger than an insulation of the transformer to ground.

14. The transformer system (110, 210) according to any of claims 7 to 13, when dependent on claim 2, wherein a number of turns between the first tap contact and the third tap contact is essentially equal to a number of turns between the third tap contact and the fourth tap contact.

Fig. 1

Fig. 2

Fig. 3

Fig. 4

Fig. 5

**S0 - S1**

CH1
X axis: time (µs)
Y axis: voltage (kV)

No. 203

Upk      : -170.253 kV
T1       : 965.464 ns
T2       : 49.113 us

**S0 - S1**

CH2
X axis: time (µs)
Y axis: current (A)

No. 203

Ipk max: -49.318 A
Ipk min: 18.067 A

Fig. 6a

CH1
S0 - S1    X axis: time (μs)
           Y axis: voltage (kV)

CH2
S0 - S1    X axis: time (μs)
           Y axis: current (A)

No. 238

Upk        : -325.125 kV
T1         : 977.655 ns
T2         : 48.106 us

No. 238

Ipk max: -90.579 A
Ipk min: 31.007 A

Fig. 6b

**S0 - S9**

CH1
X axis: time (μs)
Y axis: voltage (kV)

Fig. 7

Europäisches
Patentamt

European
Patent Office

Office européen
des brevets

# EUROPEAN SEARCH REPORT

Application Number

EP 23 38 2684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S62 85634 A (HITACHI LTD) 20 April 1987 (1987-04-20) * page 137 – page 139; figures 1-6 * ----- | 1-14 | INV. H01H9/0005 |

**TECHNICAL FIELDS SEARCHED (IPC)**

H01H

The present search report has been drawn up for all claims

| Place of search | Date of completion of the search | Examiner |
|---|---|---|
| Munich | 12 December 2023 | Drabko, Jacek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

EP 4 489 045 A1

## ANNEX TO THE EUROPEAN SEARCH REPORT
## ON EUROPEAN PATENT APPLICATION NO.

**EP 23 38 2684**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-12-2023**

| Patent document cited in search report | Publication date | Patent family member(s) | Publication date |
|---|---|---|---|
| JP S6285634 A | 20-04-1987 | NONE | |

For more details about this annex : see Official Journal of the European Patent Office, No. 12/82